# FASCICULE DE BREVET EUROPEEN

(11) **EP 3 204 628 B1**
(45) Date de publication et mention de la délivrance du brevet: **05.09.2018**
(21) Numéro de dépôt: 15788128.5
(22) Date de dépôt: 02.10.2015
(51) Int. Cl.: F02K 9/76, F02K 9/78, B64G 1/40, F02K 9/97, F15B 1/02, F15B 11/20, F15B 15/20

(54) **TUYERE D'ENGIN SPATIAL COMPRENANT UN SYSTEME DE DEPLOIEMENT AMELIORE**
RAUMFAHRZEUGDÜSE MIT VERBESSERTEM EINSATZSYSTEM
SPACECRAFT NOZZLE COMPRISING AN IMPROVED DEPLOYMENT SYSTEM

(30) Priorité: 06.10.2014 FR 1459540
(43) Date de publication de la demande: 16.08.2017
(73) Titulaire: ARIANEGROUP SAS, 75015 Paris (FR)
(72) Inventeur: GAZAVE, Robert, 27510 Panilleuse (FR); MILLON, Frédérick, 27950 Saint Marcel (FR); LELONG, Jacques, 60850 Puiseux en Bray (FR)
(74) Mandataire: Gilbey, Vincent
(86) Numéro de dépôt international: PCT/FR2015/052637
(87) Numéro de publication internationale: WO 2016/055722

(56) Documents cités:
- EP-A1- 0 173 009
- EP-A1- 2 733 340
- US-A- 4 638 947

## Description

### DOMAINE TECHNIQUE GENERAL

La présente invention concerne le domaine des tuyères pour les moteurs des étages supérieurs d'engins spatiaux.

### ETAT DE L'ART

Les tuyères de moteurs d'étages supérieurs d'engins spatiaux posent communément une problématique du fait de leur encombrement, nécessitant ainsi un espace spécifique dédié dans l'étage inférieur pour permettre d'y loger la tuyère préalablement à la séparation de l'étage supérieur.

Des solutions comprenant des tuyères articulées en deux parties ont ainsi été proposées afin de répondre à cette problématique d'encombrement ; la tuyère comprend alors une partie fixe par rapport au moteur, et une partie mobile, escamotée avant la séparation de l'étage supérieur, puis déployée et engagée sur la partie fixe pour former la tuyère du moteur.

La demande de brevet FR1458184 au nom de la demanderesse, non publiée à ce jour, présente ainsi un système de déploiement pour une tuyère en deux parties.

Le document EP 0 173 009 divulgue une tuyère d'un moteur d'engin spatial, comprenant une portion fixe par rapport au moteur, et une portion mobile par rapport à ladite portion fixe, la portion fixe présentant une extrémité libre, la portion mobile présentant une extrémité proximale et une extrémité distale, l'extrémité libre de la portion fixe et l'extrémité proximale de la portion mobile étant adaptées pour être verrouillées par engagement, la tuyère comprenant un système de déploiement pneumatique de la partie mobile disposé dans la portion fixe de la tuyère, le système de déploiement pneumatique comprenant un vérin de déploiement, adapté pour se déplacer d'une position de support dans laquelle la portion mobile de la tuyère est escamotée sur la portion fixe de la tuyère, et une position de déploiement dans laquelle l'extrémité proximale de la portion mobile de la tuyère est engagée avec la portion fixe de la tuyère; un vérin de déverrouillage bas, adapté pour se déplacer d'une position de verrouillage bas dans laquelle il verrouille le système de déploiement à la portion mobile, et une position de déverrouillage bas dans laquelle il désengage le système de déploiement de la tuyère par rapport à la portion mobile de la tuyère; et un éjecteur adapté pour exercer un effort de poussée tendant à éjecter le système de déploiement hors de la tuyère; le système de déploiement comprenant un système d'alimentation en pression pneumatique pour actionner le vérin de déploiement, le vérin de déverrouillage bas et l'éjecteur, ledit système d'alimentation étant configuré de manière à, séquentiellement, déplacer le vérin de déploiement de sa position de support vers sa position de déploiement; déplacer le vérin de déverrouillage bas dans sa position de déverrouillage bas; actionner l'éjecteur de manière à éjecter le système de déploiement hors de la tuyère. Cependant, les systèmes connus utilisés pour le déploiement et l'engagement de la tuyère conduisent à une structure complexe augmentant la masse totale de l'étage supérieur, et pénalisant ainsi les performances de l'étage supérieur.

En outre, les solutions proposées sont très complexes structurellement, ce qui est pénalisant en termes de fiabilité.

La présente invention vise ainsi à proposer une solution améliorant au moins partiellement ces aspects.

### PRESENTATION DE L'INVENTION

A cet effet, la présente invention propose une tuyère d'un moteur d'engin spatial, comprenant une portion fixe par rapport au moteur, et une portion mobile par rapport à ladite portion fixe, la portion fixe présentant une extrémité libre, la portion mobile présentant une extrémité proximale et une extrémité distale, l'extrémité libre de la portion fixe et l'extrémité proximale de la portion mobile étant adaptées pour être verrouillées par engagement, la tuyère comprenant un système de déploiement pneumatique de la partie mobile disposé dans la portion fixe de la tuyère,
le système de déploiement pneumatique comprenant :
- un vérin de déploiement, adapté pour se déplacer d'une position de support dans laquelle la portion mobile de la tuyère est escamotée sur la portion fixe de la tuyère, et une position de déploiement dans laquelle l'extrémité proximale de la portion mobile de la tuyère est engagée avec la portion fixe de la tuyère,
- un vérin de déverrouillage haut, adapté pour se déplacer d'une position de verrouillage haut dans laquelle il maintient le système de déploiement dans la portion fixe de la tuyère, à une position de déverrouillage haut dans laquelle il désengage le système de déploiement de la tuyère par rapport à la portion fixe de la tuyère ;
- un vérin de déverrouillage bas, adapté pour se déplacer d'une position de verrouillage bas dans laquelle il verrouille le système de déploiement à la portion mobile, et une position de déverrouillage bas dans laquelle il désengage le système de déploiement de la tuyère par rapport à la portion mobile de la tuyère ;
- un éjecteur adapté pour exercer un effort de poussée tendant à éjecter le système de déploiement hors de la tuyère; et
- un système d'alimentation en pression pneumatique pour actionner le vérin de déploiement, le vérin de déverrouillage haut, et vérin de déverrouillage bas et l'éjecteur, ledit système d'alimentation étant configuré de manière à, séquentiellement :
   - déplacer vérin de déploiement de sa position de support vers sa position de déploiement ;
   - déplacer les vérins de déverrouillage haut et bas dans leurs positions de déverrouillage haut et bas ;
   - actionner l'éjecteur de manière à éjecter le système de déploiement hors de la tuyère.

Le vérin de déploiement et le vérin de déverrouillage haut sont typiquement coaxiaux.

Selon un mode de réalisation particulier, le système d'alimentation réalise une alimentation en pression d'une chambre d'expansion du vérin de déploiement, ladite chambre d'expansion du vérin de déploiement étant reliée à une chambre d'expansion du vérin de déverrouillage haut par un clapet taré de déverrouillage haut, et à une chambre d'expansion du vérin de déverrouillage bas par un clapet taré de déverrouillage bas.
L'éjecteur est alors typiquement relié à la chambre d'expansion du vérin de déverrouillage haut par un clapet taré d'éjection.

Le clapet taré de déverrouillage haut et le clapet taré de déverrouillage bas sont avantageusement configurés de manière à ce que leur ouverture soit pilotée par :
- la résultante de la pression dans la chambre d'expansion du vérin de déploiement d'une part,
- la résultante de l'effort appliqué par un ressort de tarage et de la pression ambiante d'autre part.

Le système d'alimentation comprend typiquement un accumulateur pneumatique muni d'une vanne pilotée pour l'actionnement du système de déploiement.

L'invention concerne également un moteur d'engin spatial comprenant une tuyère telle que définie précédemment.
L'invention concerne en outre un engin spatial comprenant plusieurs étages superposés, sur un étage de propulsion au moins un desdits étages superposés comprenant un moteur équipé d'une tuyère telle que présentée précédemment.

### PRESENTATION DES FIGURES

D'autres caractéristiques, buts et avantages de l'invention ressortiront de la description qui suit, qui est purement illustrative et non limitative, et qui doit être lue en regard des figures annexées, sur lesquelles :
- Les figures 1 à 4 présentent une tuyère selon un aspect de l'invention dans plusieurs étapes de son déploiement,
- La figure 5 représente schématiquement un exemple de structure du système de déploiement ;
- La figure 6 représente schématiquement un exemple de clapet taré de la figure 5.

Sur l'ensemble des figures, les éléments en commun sont repérés par des références numériques identiques.

### DESCRIPTION DETAILLEE

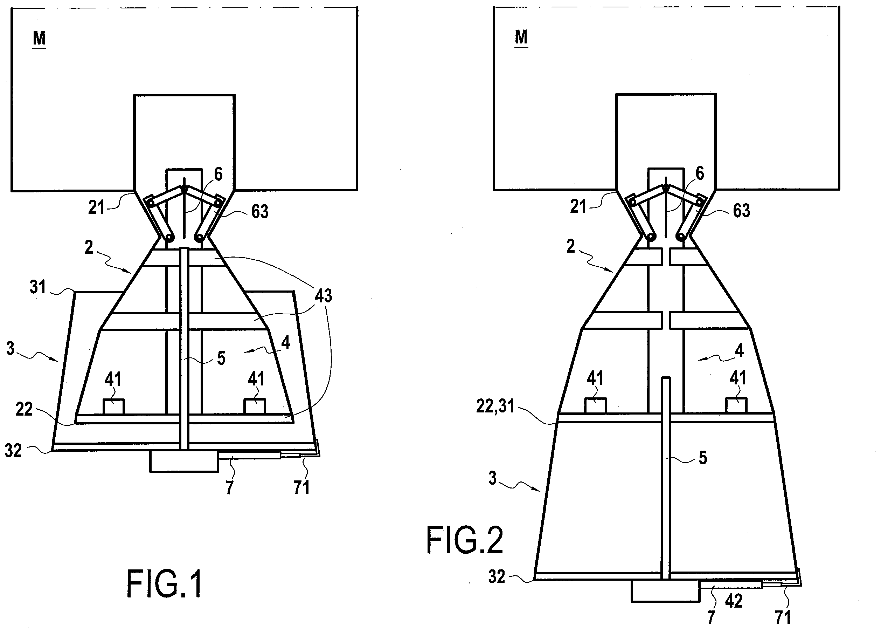

Les figures 1 à 4 présentent une tuyère selon un aspect de l'invention dans plusieurs étapes de son déploiement.
On représente ainsi sur ces figures une tuyère 1 de moteur M d'engin spatial, la tuyère 1 comprenant une portion fixe 2 et une portion mobile 3 s'étendant selon un axe longitudinal Z-Z.

La portion fixe présente une extrémité libre 22, et une extrémité d'ancrage 21 par laquelle elle est montée fixe par rapport au moteur M. La portion mobile présente une extrémité proximale 31 et une extrémité distale 32

La tuyère 1 est couplée à un système de déploiement 4 de la portion mobile 3, adapté pour déplacer la portion mobile 3 d'une configuration escamotée telle qu'illustrée sur la figure 1 à une configuration déployée telle qu'illustrée sur les figures 2 à 4.

En configuration escamotée, la portion mobile 3 de la tuyère 1 est disposée de manière à être au moins partiellement autour de la portion fixe 2 de la tuyère 1. L'extrémité distale 32 de la portion mobile 3 est alors avantageusement sensiblement au niveau de l'extrémité libre 22 de la portion fixe 2, tandis que l'extrémité proximale 31 de la portion mobile 3 est alors sensiblement au niveau de l'extrémité d'ancrage 21 de la portion fixe 2.
Dans cette configuration, l'encombrement selon la direction longitudinale est réduit, ce qui permet ainsi de minimiser le volume nécessaire pour loger la tuyère dans un étage inférieur d'un engin spatial.

En configuration déployée, la portion mobile 3 de la tuyère 1 est positionnée dans le prolongement de la portion fixe 2, formant ainsi une tuyère 1 continue.
L'extrémité proximale 31 de la portion mobile 3 peut alors par exemple être engagée avec l'extrémité libre 22 de la portion fixe 2, par exemple par encliquetage, afin d'assurer la cohésion de la tuyère 1.

Le déplacement de la portion mobile 3 est réalisé par un système de déploiement 4 pneumatique.
Le système de déploiement 4 tel qu'illustré est disposé dans la portion fixe 2 de la tuyère 1.

Le système de déploiement 4 tel que représenté comprend deux vérins ; un vérin de déploiement 5, un vérin de déverrouillage haut 6 et un vérin de déverrouillage bas 7.
Le système de déploiement 4 comprend des moyens d'engagement 63 adaptés pour sélectivement l'engager par rapport à la portion fixe 2 de la tuyère 1, ou pour le désengager par rapport à la portion fixe 2 de la tuyère 1.
Le système de déploiement 4 comprend également avantageusement au moins un disque de centrage 43, présentant chacun un diamètre externe correspondant au diamètre interne d'une section donnée de la tuyère 1, et comprenant un logement central pour le positionnement des vérins de déploiement 5 et de déverrouillage haut 6. Ces disques de centrage 43 assurent ainsi un centrage du système de déploiement 4 dans la tuyère 1.
Dans le mode de réalisation représenté, les moyens d'engagement 63 comprennent des bras articulés, adaptés pour sélectivement se déployer radialement ou se replier autour de l'axe longitudinal Z-Z de la tuyère 1, en fonction de la position du vérin de déverrouillage haut 6.
Dans le mode de réalisation représenté, le vérin de déverrouillage haut 6 est configuré de manière à se déplacer d'une position de verrouillage haut dans laquelle les moyens d'engagement sont déployés de manière à maintenir le système de déploiement 4 dans la portion fixe 2 de la tuyère 1, à une position de déverrouillage haut dans laquelle les moyens d'engagement sont repliés de manière à désengager le système de déploiement 4 de la tuyère 1 par rapport à la portion fixe 2 de la tuyère 1.
Lorsque les bras articulés sont déployés, ils viennent en butée contre un col 23 de la portion fixe 2 de la tuyère 1 d'une part de ce col 23, les disques de centrage 43 réalisant une fonction de butée d'autre part de ce col 23, ce qui bloque ainsi tous les degrés de liberté du système de déploiement 4 par rapport à la tuyère 1, à l'exception d'une rotation selon l'axe longitudinal Z-Z de la tuyère 1. On note toutefois qu'une telle rotation selon l'axe longitudinal Z-Z de la tuyère 1 peut être prévenue ou à tout le moins fortement limitée en calibrant l'effort de butée des bras articulés de sorte que les frottements qui en résultent agissent à l'encontre d'une rotation du système de déploiement 4 selon l'axe longitudinal Z-Z de la tuyère 1.
Un disque de déploiement est couplé au vérin de déploiement 5, et présente un diamètre externe correspondant avantageusement au diamètre interne de l'extrémité distale 32 de la portion mobile 3 de la tuyère 1.
Le vérin de déverrouillage bas 7 est configuré de manière à sélectivement verrouiller le système de déploiement 4 à la portion mobile 3 de la tuyère 1, ou pour désengager le système de déploiement 4 de la portion mobile 3 de la tuyère 1, respectivement dans une position de verrouillage bas et dans une position de déverrouillage bas. Le vérin de déverrouillage bas 7 est ainsi typiquement couplé à un élément de verrouillage bas 71, réalisant l'engagement avec la portion mobile 3 de la tuyère 1 lorsque le vérin de déverrouillage bas est en position de verrouillage bas.

Le vérin de déploiement 5 est configuré de manière à ce que son déplacement maximum corresponde à la configuration déployée de la portion mobile 3 de la tuyère 1, dans laquelle la portion mobile 3 est engagée avec la portion fixe 2.

Le système de déploiement 4 comprend en outre typiquement un éjecteur 41, par exemple des tuyères d'éjection, disposé par exemple sur l'un des disques de centrage 43 ou sur le disque de déploiement 53. Cet éjecteur 41 est configuré pour, en fonctionnement, exercer un effort de poussée tendant à déplacer le système de déploiement 4 hors de la tuyère 1.

On décrit ci-après les différentes étapes du déploiement de la tuyère 1 telles qu'illustrées sur les figures 1 à 4.

Comme déjà indiqué, la figure 1 représente la portion mobile 3 en configuration escamotée, de manière à réduire l'encombrement de l'ensemble.
Le vérin de déverrouillage haut 6 maintient alors le système de déploiement 4 en position au sein de la tuyère 1, et le vérin de déploiement 5 est en position rétracté, dans laquelle la portion mobile 3 de la tuyère 1 est escamotée sur la portion fixe 2 de la tuyère 1. L'élément de verrouillage bas 71 maintient la portion mobile 3 engagée avec le disque de déploiement 53.

La figure 2 représente la portion mobile 3 en configuration déployée.
Le vérin de déverrouillage haut 6 maintient le système de déploiement 4 en position au sein de la tuyère 1, tandis que le vérin de déploiement 5 est sorti jusqu'à ce que l'extrémité proximale 31 de la portion mobile 3 engage l'extrémité libre 22 de la portion fixe 2, correspondant à une position de déploiement du vérin de déploiement 5. Le vérin de déverrouillage bas 7 maintient la portion mobile 3 engagée avec le disque de déploiement 53.

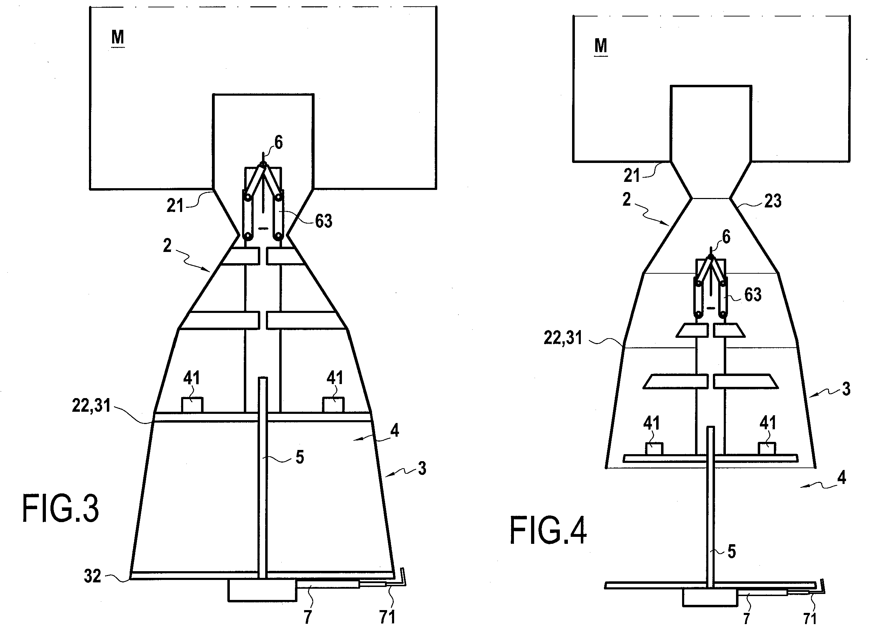

La figure 3 représente le système de déploiement 4 en configuration de déverrouillage.
Le vérin de déverrouillage haut 6 est actionné de manière à replier les moyens d'engagement 63 autour de l'axe Z-Z de la tuyère 1, et le vérin de déverrouillage bas 7 est actionné de manière à désengager la portion mobile 3 du disque de déploiement 53.
Le système de déploiement 4 est ainsi libre en translation selon l'axe longitudinal Z-Z de la tuyère 1, dans le sens d'une sortie de la tuyère 1.

La figure 4 représente l'éjection du système de déploiement 4 hors de la tuyère 1.
Le système de déploiement 4 est ici éjecté hors de la tuyère 1, de manière à ne pas l'obturer lors du fonctionnement du moteur M.

Cette éjection est par exemple réalisée par l'éjecteur 41, qui exerce un effort de poussée permettant d'éjecter le système de déploiement 4 hors de la tuyère 1, de sorte que le système de déploiement 4 soit avantageusement éjecté de la tuyère 1 préalablement à la mise à feu du moteur M.

Le système de déploiement 4 est actionné par une source d'énergie pneumatique, permettant ainsi un déploiement rapide, par exemple au moyen d'un accumulateur préalablement chargé et muni d'une vanne pilotée.
De nombreux types de gaz sont possibles pour une telle source pneumatique ; notamment GN2, GHe, de l'air comprimé.

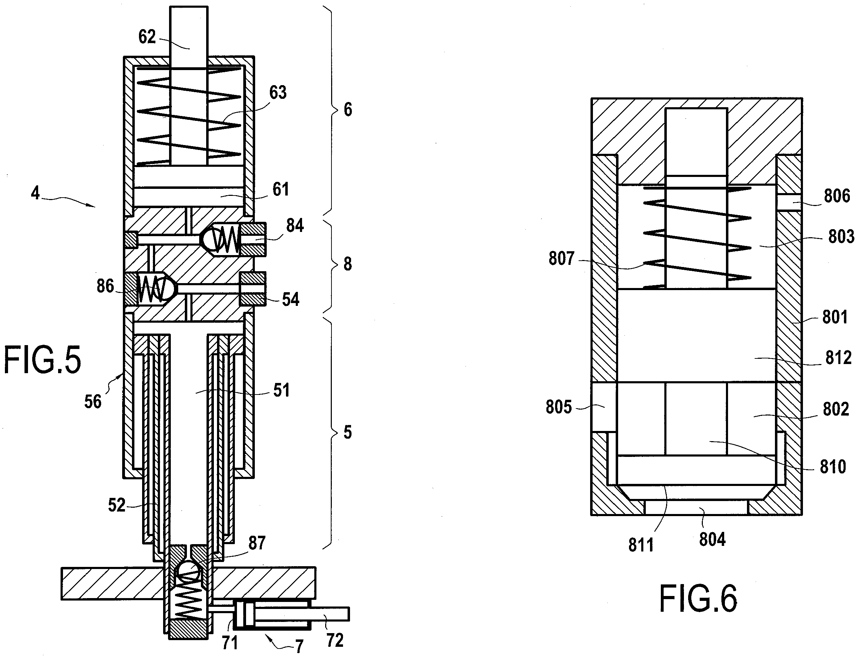

La figure 5 représente schématiquement une vue partielle d'un exemple de structure du système de déploiement 4.

Dans l'exemple présenté, le vérin de déploiement 5 et le vérin de déverrouillage haut 6 sont coaxiaux, et sont aménagés dans un même carter 56.
On définit dans le carter 56 une chambre d'expansion 51 du vérin de déploiement 5, qui comprend une tige télescopique 52 dans l'exemple illustré.
Le vérin de déverrouillage haut comprend une chambre d'expansion 61 une tige 62, et un ressort de rappel 63 s'opposant à l'effort résultant de la pression dans la chambre d'expansion 61.

Le système de déploiement 4 comprend de plus un système d'alimentation 8, disposé entre le vérin de déploiement 5 et le vérin de déverrouillage haut 6, comprenant un orifice d'alimentation 54, relié à la chambre d'expansion 51 du vérin de déploiement 5, par lequel le système de déploiement 4 est alimenté, par exemple au moyen d'un accumulateur pneumatique, un système de pressurisation pyrotechnique, ou toute autre source adaptée.

Le vérin de déverrouillage bas 7 comprend quant à lui une chambre d'expansion 71, ici représentée comme étant hors du carter 56, mais pouvant également être intégrée au carter 56, et une tige 72.

La chambre d'expansion 51 du vérin de déploiement 5 est reliée à la chambre d'expansion 61 du vérin de déverrouillage haut 6 par l'intermédiaire d'un clapet taré de déverrouillage haut 86, et à la chambre d'expansion 71 du vérin de déverrouillage bas 7 par un clapet taré de déverrouillage bas 87.

Les clapets tarés de déverrouillage haut 86 et bas 87 sont typiquement configurés de manière à ce que leurs ouvertures soient pilotées respectivement par l'établissement d'une valeur seuil de pression de déverrouillage haut et bas, pouvant être identiques ou distinctes, dans la chambre d'expansion 51 du vérin de déploiement 5.

La chambre d'expansion 51 du vérin de déploiement 5 est de plus reliée à l'éjecteur 41 via un clapet taré d'éjection 84 configuré de manière à ce que son ouverture soit pilotée par l'établissement d'une valeur seuil de pression d'éjection dans la chambre d'expansion 51 du vérin de déploiement 5.
La valeur seuil de pression d'éjection est strictement supérieure à la valeur seuil de pression de déverrouillage haut et à la valeur seuil de pression de déverrouillage bas, de manière à ce que l'ouverture du clapet taré d'éjection 84 ne puisse se produire qu'après l'ouverture des clapets tarés de déverrouillage haut 86 et bas 87.

Ainsi, en fonctionnement, l'alimentation en pression de l'orifice d'alimentation 54 entraine un déploiement du vérin de déploiement 5, ce qui va ainsi de sa position rétractée jusqu'à sa position de déploiement, de manière à positionner la portion mobile 3 de la tuyère 1 dans le prolongement de sa portion fixe 2.

Une fois le vérin de déploiement 5 en position de déploiement, il se produit une montée en pression dans la chambre de déploiement 51 du vérin de déploiement 5.
Lorsque la pression dans la chambre de déploiement 51 du vérin de déploiement 5 atteint les valeurs seuil de pression de déverrouillage haut et bas, les clapets tarés de déverrouillage haut 86 et bas 87 s'ouvrent respectivement, entrainant alors une montée en pression dans les chambres d'expansion 61 et 71 du vérin de déverrouillage haut 6 et du vérin de déverrouillage bas 7 respectivement, ce qui entraine le déplacement du vérin de déverrouillage haut 6 de sa position de verrouillage haut à sa position de déverrouillage haut, et le déplacement du vérin de déverrouillage bas 7 de sa position de verrouillage bas à sa position de déverrouillage bas, ce qui déverrouille le système de déploiement 4 par rapport à la tuyère 1.

Les valeurs seuil de pression de déverrouillage haut et bas peuvent être identiques ou distinctes, de sorte que le vérin de déverrouillage haut 6 et le vérin de déverrouillage bas 7 sont déplacés simultanément ou successivement.

Une fois le vérin de déverrouillage haut 6 et le vérin de déverrouillage bas 7 dans leurs positions de déverrouillage haut et bas respectives, la montée en pression se poursuit, dans les chambres de déploiement 51, 61 et 71 respectivement du vérin de déploiement 5, du vérin de déverrouillage haut 6 et du vérin de déverrouillage bas 7, jusqu'à atteindre la valeur seuil de pression d'éjection, qui entraine ainsi l'ouverture du clapet d'éjection 84 et la mise en service de l'éjecteur 41, qui éjecte alors le système de déploiement 4 de la tuyère 1.

Ainsi, par une unique source d'alimentation en pression réalisant une alimentation continue en pression du système de déploiement 4, le système d'alimentation 8 permet de réaliser successivement le déploiement de la tuyère 1, le déverrouillage du système de déploiement 4 par rapport à la tuyère 1, et l'éjection du système de déploiement 4 de la tuyère 1.

Le système de déploiement 4 ainsi proposé permet de réaliser un déploiement de la tuyère 1 de manière fiable, au moyen d'actionneurs pneumatiques.
La structure du système de déploiement 4 proposée présente de plus un regroupement des composants, ce qui permet à la fois de limiter l'encombrement du système, et également d'en améliorer la fiabilité en limitant les assemblages entre les différents composants du système de déploiement 4.

Les clapets tarés de déverrouillage haut 86 et bas 87 sont typiquement configurés de manière à ce que leur ouverture soit pilotée par :
- la résultante de la pression dans la chambre d'expansion 51 du vérin de déploiement 5 d'une part,
- la résultante de l'effort appliqué par un ressort de tarage et de la pression ambiante d'autre part.

De cette manière, les clapets tarés de déverrouillage haut 86 et bas 87 demeurent ouverts lors de l'équilibrage en pression entre la chambre d'expansion 51 du vérin de déploiement 5 et les chambres d'expansion 61 et 71 des vérins de déverrouillage haut 6 et bas 7.

Les clapets tarés de déverrouillage haut 86 et bas 87 ont ainsi typiquement une structure telle qu'illustrée sur la figure 6, décrite ci-après.

On représente ainsi sur la figure 6 un exemple de clapet taré, comprenant un carter 801, une tige 810 munie d'un premier piston 811 et d'un second piston 812, disposés successivement sur la tige 810.

On définit ainsi une cavité d'alimentation 802 et une cavité de mise à l'air libre 803 dans le carter 801, ces cavités étant isolées l'une de l'autre par le second piston 812.
Le carter 801 comprend un orifice d'alimentation 804, aménagé de manière à être obturé par le premier piston 811 sous l'action d'un ressort de poussée 807, l'orifice d'alimentation 804 débouchant dans la cavité d'alimentation 802 lorsqu'il n'est pas obturé par le premier piston 811.
Le carter 801 comprend également un orifice de sortie 805, débouchant dans la cavité d'alimentation 802, et un orifice de mise à l'air libre 806 débouchant dans la cavité de mise à l'air libre 803, de manière à ce que la cavité de mise à l'air libre 803 soit à pression ambiante.
Lorsque le premier piston 811 obture l'orifice d'alimentation 804, l'application d'une pression via l'orifice d'alimentation 804 applique un effort de poussée sur le premier piston 811, auquel s'oppose l'effort appliqué par le ressort de poussée 807 et la résultante de la pression dans la cavité d'alimentation 802.
Lorsque la pression appliquée via l'orifice d'alimentation 804 dépasse une valeur seuil, le ressort de poussée 807 est comprimé, ce qui déplace la tige 810 et relie ainsi l'orifice d'alimentation 804 à l'orifice de sortie 805 via la cavité d'alimentation 802. Il se produit alors un équilibrage en pression entre l'orifice d'alimentation 804, l'orifice de sortie 805 et la cavité d'alimentation 802.
Or, dès lors que le premier piston 811 n'obture plus l'orifice d'alimentation 804, seul l'effort appliqué par le ressort de poussée 807 s'oppose à la résultante de la pression au sein de la cavité d'alimentation 802 appliquée sur le premier piston 811 et le second piston 812, dans la mesure où la cavité de mise à l'air libre 803 est à pression ambiante.
Ainsi, le premier piston 811 ne se referme pas sur l'orifice d'alimentation 804 lors de l'équilibrage en pression entre l'orifice d'alimentation 804, l'orifice de sortie 805 et la cavité d'alimentation 802, ce qui permet de réaliser une alimentation en pression continue de l'orifice de sortie 805.

En utilisant de tels clapets tarés pour les clapets tarés de déverrouillage haut 86 et bas 87, on réalise ainsi un déplacement continu et lissé des vérins de déverrouillage haut 6 et bas 7.

Le clapet d'éjection 84 peut également présenter une structure de clapet taré telle que présentée sur la figure 6, ou être un clapet conventionnel, dont l'ouverture dépend du différentiel de pression entre l'amont et l'aval du clapet.

## Revendications

1. Tuyère (1) d'un moteur (M) d'engin spatial, comprenant une portion fixe (2) par rapport au moteur (M), et une portion mobile (3) par rapport à ladite portion fixe (2), la portion fixe (2) présentant une extrémité libre (22), la portion mobile (3) présentant une extrémité proximale (31) et une extrémité distale (32), l'extrémité libre (22) de la portion fixe (2) et l'extrémité proximale (31) de la portion mobile (3) étant adaptées pour être verrouillées par engagement, la tuyère (1) comprenant un système de déploiement (4) pneumatique de la partie mobile (3) disposé dans la portion fixe (2) de la tuyère (1),
le système de déploiement (4) pneumatique comprenant :
- un vérin de déploiement (5), adapté pour se déplacer d'une position de support dans laquelle la portion mobile (3) de la tuyère (1) est escamotée sur la portion fixe (2) de la tuyère (1), et une position de déploiement dans laquelle l'extrémité proximale (31) de la portion mobile (3) de la tuyère (1) est engagée avec la portion fixe (2) de la tuyère (1),
- un vérin de déverrouillage haut (6), adapté pour se déplacer d'une position de verrouillage haut dans laquelle il maintient le système de déploiement (4) dans la portion fixe (2) de la tuyère (1), à une position de déverrouillage haut dans laquelle il désengage le système de déploiement (4) de la tuyère (1) par rapport à la portion fixe (2) de la tuyère (1) ;
- un vérin de déverrouillage bas (7), adapté pour se déplacer d'une position de verrouillage bas dans laquelle il verrouille le système de déploiement (4) à la portion mobile (3), et une position de déverrouillage bas dans laquelle il désengage le système de déploiement (4) de la tuyère (1) par rapport à la portion mobile (3) de la tuyère (1) ;
- un éjecteur (41) adapté pour exercer un effort de poussée tendant à éjecter le système de déploiement (4) hors de la tuyère (1); et
- un système d'alimentation (8) en pression pneumatique pour actionner le vérin de déploiement (5), le vérin de déverrouillage haut (6), et vérin de déverrouillage bas (7) et l'éjecteur (41), ledit système d'alimentation (8) étant configuré de manière à, séquentiellement :
- déplacer le vérin de déploiement (5) de sa position de support vers sa position de déploiement ;
- déplacer les vérins de déverrouillage haut (6) et bas (7) dans leurs positions de déverrouillage haut et bas ;
- actionner l'éjecteur de manière à éjecter le système de déploiement (4) hors de la tuyère (1).

2. Tuyère (1) selon la revendication 1, dans laquelle le vérin de déploiement (5) et le vérin de déverrouillage haut (6) sont coaxiaux.

3. Tuyère (1) selon l'une des revendications 1 ou 2, dans lequel le système d'alimentation (8) réalise une alimentation en pression d'une chambre d'expansion (51) du vérin de déploiement (5), ladite chambre d'expansion (51) du vérin de déploiement (5) étant reliée à une chambre d'expansion (61) du vérin de déverrouillage haut (6) par un clapet taré de déverrouillage haut (86), et à une chambre d'expansion (71) du vérin de déverrouillage bas (7) par un clapet taré de déverrouillage bas (87).

4. Tuyère (1) selon la revendication 3, dans laquelle l'éjecteur (41) est relié à la chambre d'expansion du vérin de déverrouillage haut (6) par un clapet taré d'éjection (84).

5. Tuyère (1) selon l'une des revendications 3 ou 4, dans laquelle le clapet taré de déverrouillage haut (86) et le clapet taré de déverrouillage bas (87) sont configurés de manière à ce que leur ouverture soit pilotée par :
- la résultante de la pression dans la chambre d'expansion (51) du vérin de déploiement (5) d'une part,
- la résultante de l'effort appliqué par un ressort de tarage et de la pression ambiante d'autre part.

6. Tuyère (1) selon l'une des revendications 1 à 5, dans laquelle le système d'alimentation (8) comprend un accumulateur pneumatique muni d'une vanne pilotée pour l'actionnement du système de déploiement (4).

7. Moteur (M) d'engin spatial comprenant une tuyère (1) selon l'une des revendications 1 à 6.

8. Engin spatial comprenant plusieurs étages superposés, sur un étage de propulsion au moins un desdits étages superposés comprenant un moteur (M) équipé d'une tuyère (1) selon l'une des revendications 1 à 6.

## Patentansprüche

1. Düse (1) für einen Raumfahrzeugmotor (M), umfassend einen Abschnitt (2), der in Bezug auf den Motor (M) fest ist, und einen Abschnitt (3), der in Bezug auf den festen Abschnitt (2) beweglich ist, wobei der feste Abschnitt (2) ein freies Ende (22) aufweist, wobei der bewegliche Abschnitt (3) ein proximales Ende (31) und ein distales Ende (32) aufweist, wobei das freie Ende (22) des festen Abschnitts (2) und das proximale Ende (31) des beweglichen Abschnitts (3) ausgebildet sind, um durch Eingriff verriegelt zu werden, wobei die Düse (1) ein pneumatisches Bereitstellungssystem (4) des beweglichen Teils (3) umfasst, das in dem festen Abschnitt (2) der Düse (1) angeordnet ist,
wobei das pneumatische Bereitstellungssystem (4) umfasst:
- einen Bereitstellungszylinder (5), der eingerichtet ist, um sich von einer Halteposition, in der der bewegliche Abschnitt (3) der Düse (1) in den festen Abschnitt (2) der Düse (1) eingefahren ist, und einer Bereitstellungsposition, in der das proximale Ende (31) des beweglichen Abschnitts (3) der Düse (1) mit dem festen Abschnitt (2) der Düse (1) in Eingriff ist, zu bewegen,
- einen oberen Entriegelungszylinder (6), der ausgebildet ist, um sich von einer oberen Verriegelungsposition, in der er das Bereitstellungssystem (4) in dem festen Abschnitt (2) der Düse (1) hält, zu einer oberen Entriegelungsposition, in der er das Bereitstellungssystem (4) der Düse (1) in Bezug auf den festen Abschnitt (2) der Düse (1) löst, zu bewegen,
- einen unteren Entriegelungszylinder (7), der ausgebildet ist, um sich von einer unteren Verriegelungsposition, in der er das Bereitstellungssystem (4) an dem beweglichen Abschnitt (3) verriegelt, und einer unteren Entriegelungsposition, in der er das Bereitstellungssystem (4) der Düse (1) in Bezug auf den beweglichen Abschnitt (3) der Düse (1) löst, zu bewegen,
- einen Auswerfer (41), der ausgebildet ist, um eine Presskraft zum Auswerfen des Bereitstellungssystems (4) aus der Düse (1) auszuüben, und
ein System zum Zuführen (8) von pneumatischem Druck, um den Bereitstellungszylinder (5), den oberen Entriegelungszylinder (6) und den unteren Entriegelungszylinder (7) und den Auswerfer (41) zu betätigen, wobei das Zuführsystem (8) eingerichtet ist, um nacheinander:
- den Bereitstellungszylinder (5) von seiner Halteposition in seine Bereitstellungsposition zu bewegen,
- den oberen (6) und unteren (7) Entriegelungszylinder in ihre obere bzw. untere Entriegelungsposition zu bewegen,
- den Auswerfer zu betätigen, um das Bereitstellungssystem (4) aus der Düse (1) auszuwerfen.

2. Düse (1) gemäß Anspruch 1, wobei der Bereitstellungszylinder (5) und der obere Entriegelungszylinder (6) koaxial sind.

3. Düse (1) gemäß einem der Ansprüche 1 oder 2, wobei das Zuführsystem (8) Druck eine Druckversorgung einer Expansionskammer (51) des Bereitstellungszylinders (5) ermöglicht, wobei die Expansionskammer (51) des Bereitstellungszylinders (5) mit einer Expansionskammer (61) des oberen Entriegelungszylinders (6) über ein kalibriertes oberes Entriegelungsventil (86) und mit einer Expansionskammer (71) des unteren Entriegelungszylinders (7) über ein kalibriertes unteres Entriegelungsventil (87) verbunden ist.

4. Düse (1) gemäß Anspruch 3, wobei der Auswerfer (41) mit der Expansionskammer des oberen Entriegelungszylinders (6) über ein kalibriertes Auswerfventil (84) verbunden ist.

5. Düse (1) gemäß einem der Ansprüche 3 oder 4, wobei das kalibrierte obere Entriegelungsventil (86) und das kalibrierte untere Entriegelungsventil (87) derart eingerichtet sind, dass ihre Öffnung gesteuert wird durch:
- die Resultante des Drucks in der Expansionskammer (51) des Bereitstellungszylinders (5) einerseits,
- die Resultante der durch eine Tarierfeder und den Umgebungsdruck ausgeübten Kraft andererseits.

6. Düse (1) gemäß einem der Ansprüche 1 bis 5, wobei das Zuführsystem (8) einen Druckluftspeicher umfasst, der mit einem gesteuerten Ventil zur Betätigung des Bereitstellungssystems (4) versehen ist.

7. Motor (M) eines Raumfahrzeugs, umfassend eine Düse (1) gemäß einem der Ansprüche 1 bis 6.

8. Raumfahrzeug, umfassend mehrere übereinander angeordnete Stufen, die auf einer Antriebsstufe angeordnet sind, wobei mindestens eine der übereinander angeordneten Stufen einen Motor (M) umfasst, der mit einer Düse (1) gemäß einem der Ansprüche 1 bis 6 ausgestattet ist.

## Claims

1. A nozzle (1) for a space vehicle engine (M), the nozzle (1) comprising a stationary portion (2) that is stationary relative to the engine (M), and a movable portion (3) that is movable relative to said stationary portion (2), the stationary portion (2) presenting a free end (22), the movable portion (3) presenting a proximal end (31) and a distal end (32), the free end (22) of the stationary portion (2) and the proximal end (31) of the movable portion (3) being adapted to be locked together by engagement, the nozzle (1) having a pneumatic deployment system (4) for deploying the movable portion (3) and arranged in the stationary portion (2) of the nozzle (1),
the pneumatic deployment system (4) comprising:
• a deployment actuator (5) adapted to move from a support position in which the movable portion (3) of the nozzle (1) is retracted over the stationary portion (2) of the nozzle (1), and a deployed position in which the proximal end (31) of the movable portion (3) of the nozzle (1) is engaged with the stationary portion (2) of the nozzle (1);
• a high unlocking actuator (6) adapted to move from a high locking position in which it holds the deployment system (4) in the stationary portion (2) of the nozzle (1) to a high unlocking position in which it disengages the deployment system (4) of the nozzle (1) from the stationary portion (2) of the nozzle (1);
• a low unlocking actuator (7) adapted to move from a low locking position in which it locks the deployment system (4) to the movable portion (3), and a low unlocking position in which it disengages the deployment system (4) of the nozzle (1) from the movable portion (3) of the nozzle (1); and
• an ejector (41) adapted to exert a thrust force tending to eject the deployment system (4) from the nozzle (1); and
• a pneumatic pressure feed system (8) for actuating the deployment actuator (5), the high unlocking actuator (6), and the low unlocking actuator (7), and the ejector (41), said feed system (8) being configured in such a manner as to, sequentially:
• move the deployment actuator (5) from its support position towards its deployment position;
• move the high and low unlocking actuators (6, 7) into their high and low unlocking positions; and
• actuate the ejector so as to eject the deployment system (4) from the nozzle (1).

2. A nozzle (1) according to claim 1, wherein the deployment actuator (5) and the high unlocking actuator (6) lie on the same axis.

3. A nozzle (1) according to claim 1 or claim 2, wherein the feed system (8) feeds pressure to an expansion chamber (51) of the deployment actuator (5), said expansion chamber (51) of the deployment actuator (5) being connected to an expansion chamber (61) of the high unlocking actuator (6) via a high unlocking rated valve (86), and to an expansion chamber (71) of the low unlocking actuator (7) via a low unlocking rated valve (87) .

4. A nozzle (1) according to claim 3, wherein the ejector (41) is connected to the expansion chamber of the high unlocking actuator (6) via an ejection rated valve (84).

5. A nozzle (1) according to claim 3 or claim 4, wherein the high unlocking rated valve (86) and the low unlocking rated valve (87) are configured so that they are opened by:
• the resultant of the pressure in the expansion chamber (51) of the deployment actuator (5); together with
• the resultant of the force applied by a rating spring and ambient pressure.

6. A nozzle (1) according to any one of claims 1 to 5, wherein the feed system (8) comprises a pneumatic accumulator having a controlled valve for actuating the deployment system (4).

7. A space vehicle engine (M) having a nozzle (1) according to any one of claims 1 to 6.

8. A space vehicle comprising a plurality of superposed stages superposed on a propulsion stage, at least one of said superposed stages including an engine (M) fitted with a nozzle (1) according to any one of claims 1 to 6.
